# FASCICULE DE BREVET EUROPEEN

(11) **EP 0 436 221 B1**
(45) Date de publication et mention de la délivrance du brevet: **26.06.1996**
(21) Numéro de dépôt: 90125594.3
(22) Date de dépôt: 27.12.1990
(51) Int. Cl.: H01B 7/36

(54) **Câble marquable par laser**
Laser-markierbares Kabel
Laser-markable cable

(30) Priorité: 03.01.1990 FR 9000030
(43) Date de publication de la demande: 10.07.1991
(73) Titulaire: FILOTEX S.A. dite, F-91210 Draveil (FR)
(72) Inventeur: Ferlier, Jean-Pierre, F-91330 Yerres (FR); Basly, Michel, F-91260 Juvisy Sur Orge (FR)
(74) Mandataire: Weinmiller, Jürgen

(56) Documents cités:
- EP-A- 0 190 997
- EP-A- 0 329 884
- FR-A- 2 617 325

## Description

La présente invention concerne un câble électrique ou à fibres optiques marquable par laser, à couche extérieure formée par un vernis permettant la réalisation du marquage, comportant une sous-couche interne munie d'un pigment lui conférant une couleur sombre, et une couche externe munie d'un pigment, lui conférant une couleur claire, et sublimable sous l'effet d'un rayonnement laser.

La demande de brevet FR-A-2602904 de la demanderesse porte sur un câble électrique marquable par laser, comportant une couche extérieure mince permettant son marquage, de couleur contrastée par rapport à celle d'une sous-couche absorbante à la longueur d'onde d'un rayon laser infrarouge, cette couche extérieure étant, lors du marquage, détruite dans toute son épaisseur par le rayon laser de manière à laisser apparaître la sous-couche.

La demande de brevet EP-A-0 329 884 décrit un câble marquable par laser, comportant une couche d'isolation munie d'un pigment permettant son marquage par modification de la couleur du pigment, sans destruction en épaisseur de la couche d'isolation, à l'aide d'un laser UV ou visible.

Il est cependant désirable dans certains cas de pouvoir effectuer sur un câble des marquages au moyen de lasers de types différents, marquages faciles à distinguer sur le câble.

La présente invention a pour but de procurer un câble marquable par des types différents de lasers, de façon à y faire apparaître des marquages distincts faciles à interpréter. Elle propose à cet effet un câble à couche de vernis de protection extérieure formée par :
- une couche externe munie d'un pigment lui conférant une couleur de base, ladite couche externe étant à la fois sublimable par le rayonnement d'un laser d'un premier type situé dans le domaine de l'infrarouge, au point d'impact dudit rayonnement, et en outre modifiable en couleur, sans destruction en épaisseur, par un autre rayonnement laser d'un deuxième type situé dans l'un des domaines définis par l'ultraviolet et le visible,
- une sous-couche interne de couleur contrastés par rapport à la couleur de base de ladite couche externe,
caractérisé en ce que le pigment de ladite couche externe est constitué par un mélange en proportions pondérales, rapportées au poids de liant sec, de 2 à 10 % de dioxyde de titane, et de 5 à 30 % d'au moins un composé minéral du groupe constitué par le sulfure de zinc, la céruse, l'oxyde d'antimoine, le silicate neutre ou basique de plomb, l'oxyde de zinc, le trioxyde de molybdène, le sulfure de cadmium, le carbonate de calcium et de magnésium, et en ce que ladite couche externe a une épaisseur comprise entre 5 µm et 25 µm.

Grâce à l'invention, les marquages par sublimation ou par modification en couleur de la couche externe sont faciles à distinguer sur le câble, et la couche externe a un pouvoir opacifiant permettant de masquer la couleur de la sous-couche de couleur constrastée.

Les rayonnements laser (Excimère, YAG triplé, Cuivre, YAG doublé) qui ne modifient que la couleur d'une partie de l'épaisseur de la couche externe diffèrent de ceux qui subliment cette couche (Laser YAG, Laser à gaz carbonique), par leurs longueurs d'onde et/ou leurs énergies et/ou durées d'impulsion.

On peut utiliser un rayonnement laser du domaine de l'ultra-violet, du domaine visible ou du domaine de l'infra-rouge. Dans le cas d'un rayonnement dans l'ultra-violet, on peut utiliser un laser à excimères, par exemple à gaz Xénon/Chlore (0,308 micromètre) ou Krypton/Fluor (0,248 micromètre) ou un laser YAG à tripleur de longueur d'onde, donnant une fréquence de 0,35 micromètre. Pour un rayonnement dans le visible, on peut utiliser un laser à la vapeur de cuivre (0,51 et 0,58 micromètre) ou un laser YAG à doubleur de fréquence (0,53 micromètre). Pour un rayonnement dans le proche infra-rouge, on peut utiliser un laser YAG de fréquence 1,06 micromètre. Pour un rayonnement dans l'infra-rouge, on peut utiliser un laser à gaz carbonique de fréquence 10,6 micromètres.

Les vernis utilisables peuvent notamment être des vernis fluorocarbonés, tels que le polytétrafluoroéthylène, les copolymères d'éthylène et de tétrafluoroéthylène, les copolymères de tétrafluoroéthylène et d'haxafluoropropylène, les résines de polyfluorure de vinylidène, ou des vernis polyuréthannes, polyamides aromatiques, polyimides, etc...

La sous-couche interne peut être par exemple en polytétrafluoroéthylène, tel que le "Téflon 30N" de Dupont de Nemours, obtenu à partir d'une dispersion aqueuse, ou en polyamide aromatique, tel que l'"Imitec 302" de la société Imitec, obtenu à partir d'une solution dans la N-méthyl-pyrrolidone. Son épaisseur minimale est de 15 à 25 micromètres.

Le pigment foncé de cette sous-couche interne peut être un pigment marron foncé tel que le pigment "Marron Sicopal K2795" de la société BASF, ou un pigment noir tel que le pigment "FA 2306" de la société Ferro, ou une combinaison de tels pigments.

La couche externe peut être de même nature chimique que la sous-couche interne, ou d'une nature différente de celle-ci.

Son épaisseur doit cependant être d'au moins 5 micromètres pour que son pouvoir opacifiant permette de masquer la couleur de la sous-couche de couleur contrastée. Son épaisseur doit être d'au plus 25 microns pour que le rayonnement laser sublimant la couche externe puisse faire apparaître la sous-couche interne. Son pigment est constitué de préférence par l'association d'un premier pigment, en proportion de 2 à 10 % par rapport au poids du liant sec, formé par du dioxyde de titane, sous les formes anatase ou rutile, par exemple le pigment "Kronos RN 59" de la société NL Chemicals, et d'un second pigment, en proportion pondérale de 5 à 30 % par rapport au poids du liant sec, constitué par l'un au moins des pigments suivants : sulfure de zinc, céruse, oxyde d'antimoine, silicate neutre ou basique de plomb, oxyde de zinc, trioxyde de molybdène, sulfure de cadmium, carbonate de calcium et de magnésium. D'autres pigments colorés peuvent être ajoutés en faible proportion (de 0,1 à 5% du liant sec) de façon à obtenir des teintes pastels.

Il est décrit ci-après, à titre d'exemple et en référence aux figures du dessin annexé, le marquage par laser d'un câble selon l'invention.

La figure 1 représente le marquage de la couche externe entraînant sa modification de coloration, sans destruction.

La figure 2 représente le marquage possible par sublimation de la couche externe, rendant visible la sous-couche interne de couleur contrastée, ce mode de marquage étant selon l'art connu indiqué ci-avant.

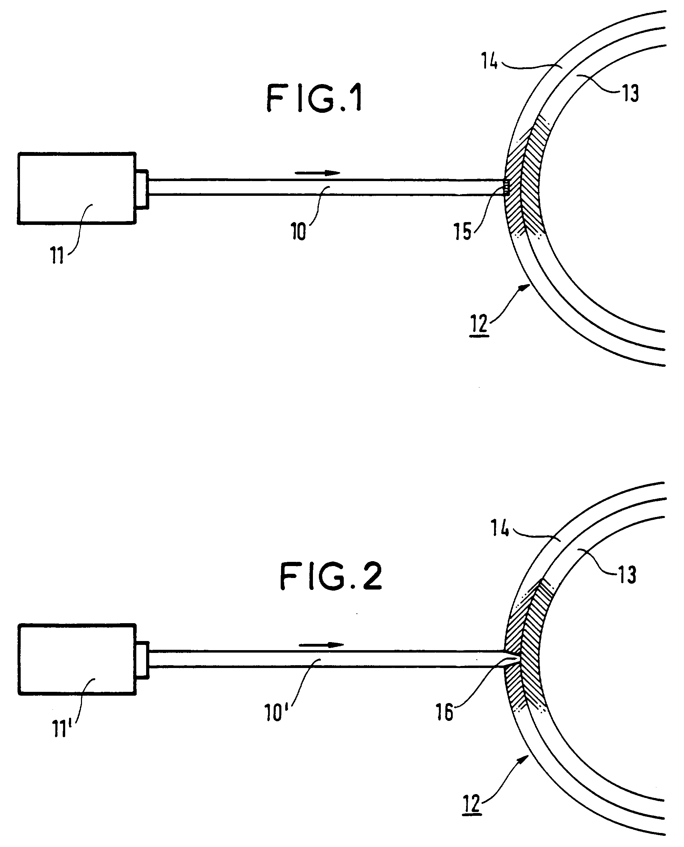

Dans la figure 1, un faisceau laser 10 issu d'une source laser 11 est dirigé sur la surface d'un câble électrique 12, muni d'une couche extérieure de vernis formée d'une sous-couche interne 13 et d'une couche externe 14. La couche externe étant d'une épaisseur supérieure à 5 micromètres et inférieure à 25 micromètres, n'est transformée au point d'impact que superficiellement sous forme d'une tache 15 plus foncée que le reste de cette sous-couche, résultant de la transformation de son pigment. On obtient ainsi un premier marquage.

La figure 2 représente le marquage par sublimation de la couche externe 14. Le faisceau laser 10' issu d'une autre source laser 11' sublime à son point d'impact 16 la couche externe, sur toute son épaisseur, et laisse apparaître la sous-couche interne 13 qui réfléchit le rayonnement laser.

Ces deux sources 11 et 11' appartiennent aux deux types de sources définies ci-avant. L'utilisation d'une source laser du premier type ou du deuxième type permet l'un ou l'autre de deux modes de marquage possibles de ce même câble.

## Revendications

1. Câble à couche de vernis de protection extérieure (12) formée par :
- une couche externe (14) munie d'un pigment lui conférant une couleur de base, ladite couche externe (14) étant à la fois sublimable par le rayonnement d'un laser (10') d'un premier type situé dans le domaine de l'infrarouge, au point d'impact dudit rayonnement, et en outre modifiable en couleur, sans destruction en épaisseur, par un autre rayonnement laser (10) d'un deuxième type situé dans l'un des domaines définis par l'ultraviolet et le visible,
- une sous-couche interne (13) de couleur contrastée par rapport à la couleur de base de ladite couche externe,
**caractérisé en ce que** le pigment de ladite couche externe (14) est constitué par un mélange en proportions pondérales, rapportées au poids de liant sec, de 2 à 10 % de dioxyde de titane, et de 5 à 30% d'au moins un composé minéral du groupe constitué par le sulfure de zinc, la céruse, l'oxyde d'antimoine, le silicate neutre ou basique de plomb, l'oxyde de zinc, le trioxyde de molybdène, le sulfure de cadmium, le carbonate de calcium et de magnésium, et en ce que ladite couche externe (14) a une épaisseur comprise entre 5 µm et 25 µm.

## Patentansprüche

1. Kabel mit äußerer Lackierung (12), die besteht aus
- einer äußeren Schicht (14) mit einem Pigment, das der Schicht eine Grundfarbe verleiht, wobei die äußere Schicht (14) wahlweise durch die Strahlung eines Lasers (10') eines ersten Typs im Infrarotbereich am Auftreffpunkt der Strahlung verdampft oder ohne Zerstörung durch die Strahlung eines anderen Lasers (10) eines zweiten Typs, die sich im vom Ultraviolettlicht oder vom sichtbaren Licht definierten Bereich befindet, eine Farbveränderung erfahren kann,
- einer inneren Unterschicht (13), deren Farbe in Bezug auf die Basisfarbe der äußeren Schicht einen Kontrast bildet,
dadurch gekennzeichnet, daß das Pigment der äußeren Schicht (14) aus einer Mischung in Gewichtsanteilen in Bezug auf das Gewicht des trockenen Bindemittels 2 bis 10% Titandioxid und 5 bis 30% mindestens einer mineralischen Verbindung aus der Gruppe gebildet wird, die aus Zinksulfid, Bleiweiß, Antimonoxid, neutrales oder basisches Bleisilikat, Zinkoxid, Molybdäntrioxid, Kadmiumsulfid, Kalziumkarbonat und Magnesiumkarbonat besteht, und daß die äußere Schicht (14) zwischen 5 µm und 25 µm dick ist.

## Claims

1. A cable having an outer protective layer (12) of varnish constituted by:
an outer layer (14) provided with a pigment imparting a base color thereto, said outer layer (14) being both sublimable at the point of impact of laser radiation from a laser (10') of a first type situated in the infrared and also capable of having its color modified by other laser radiation (10) of a second type without destroying the thickness of said outer layer situated in the ultraviolet or the visible;
an inner underlayer (13) of a contrasting color relative to the base color of said outer layer,
the cable being characterized in that said outer layer (14) is constituted by a mixture in weight percentages relative to the weight of dry binder comprising 2% to 10% titanium dioxide and 5% to 30% of at least one inorganic compound of the group constituted by: zinc sulfide, white lead, antimony oxide, neutral or basic lead silicate, zinc oxide, molybdenum trioxide, cadmium sulfide, and calcium and magnesium carbonate, and in that said outer layer (14) has a thickness lying in the range 5 µm to 25 µm.
